# FASCICULE DE BREVET EUROPEEN

(11) **EP 0 701 641 B1**
(45) Date de publication et mention de la délivrance du brevet: **10.09.1997**
(21) Numéro de dépôt: 94917718.2
(22) Date de dépôt: 03.06.1994
(51) Int. Cl.: D21H 23/58, D21H 27/32, D21H 27/40, B05C 1/08, B05C 1/16, B32B 31/00, B31F 5/04

(54) **PROCEDE D'APPLICATION DE COLLE, DISPOSITIF APPLICATEUR ET PRODUIT OBTENU**
VERFAHREN ZUM AUFTRAG EINES KLEBEMITTELS, AUFTRAGSVORRICHTUNG UND HERGESTELLTES PRODUKT
METHOD FOR APPLYING AN ADHESIVE, APPLICATOR DEVICE AND PRODUCT

(30) Priorité: 03.06.1993 FR 9306668
(43) Date de publication de la demande: 20.03.1996
(73) Titulaire: JAMES RIVER, 68320 Kunheim (FR)
(72) Inventeur: RUPPEL, Rémy, F-68320 Durrenentzen (FR); POINT, Rémy, F-68000 Colmar (FR); ROUSSEL, Gilles, F-68000 Colmar (FR)
(74) Mandataire: David, Daniel
(86) Numéro de dépôt international: FR9400657
(87) Numéro de publication internationale: WO9429524

(56) Documents cités:
- WO-A-90/14950
- WO-A-92/14605
- US-A- 3 867 225
- US-A- 4 610 743
- US-A- 4 967 663

## Description

L'invention concerne le domaine du papier, en particulier de l'ouate de cellulose c'est-à-dire du papier absorbant destiné à un usage sanitaire ou domestique tel que papier hygiénique, essuie- tout, serviette de table ou à démaquiller, mouchoir ou tout autre produit semblable. Elle vise un procédé d'application de colle et en particulier un procédé de collage permettant l'application d'une quantité minimale de colle pour lier entre elles deux bandes de papier, notamment d'ouate de cellulose.

Dans le domaine du papier sanitaire et domestique, pour la réalisation de produits, tels que papier hygiénique, essuie-tout, il est connu de gaufrer des bandes de papier et de les lier entre elles au moyen de colle.

Un procédé consiste à gaufrer chaque bande de papier sur une unité de gaufrage constituée d'un cylindre gravé et d'un contre- cylindre en caoutchouc, à appliquer la colle au moyen d'un dispositif applicateur de colle sur les reliefs de gaufrage de l'une des feuilles et à associer celles-ci au moyen d'un cylindre marieur. Cette méthode permet de ménager des vides entre les plis et de fournir un produit épais avec une absorption accrue par rapport à une feuille non gaufrée. La colle cependant a tendance à rigidifier la feuille obtenue et nuit à la douceur.

Le brevet US 3867225 décrit un tel procédé où les plis sont d'abord gaufrés de manière à présenter des reliefs en forme de protubérances à section circulaire ou allongée puis sont associés de façon que les protubérances de l'un viennent s'emboîter entre celles de l'autre.

Le dispositif d'encollage décrit dans ce brevet est constitué d'une combinaison de trois cylindres rotatifs : un premier cylindre prélevant la colle d'un récipient, un deuxième cylindre recevant la colle du premier et la transférant en quantité dosée à un troisième cylindre assurant son application sur les protubérances de l'un des plis. Afin de limiter la quantité de colle déposée, on prévoit de graver ce troisième cylindre de telle sorte qu'il présente des zones en relief qui seules sont mouillées par le deuxième cylindre. Ainsi la surface de liaison entre les deux plis est réduite à celle occupée par le motif des reliefs du cylindre applicateur. Cette solution est satisfaisante en théorie puisqu'elle permet de réaliser une bonne liaison tout en maîtrisant la rigidité de la feuille obtenue. Toutefois, en fonctionnement, il se forme sur les flancs des reliefs du troisième cylindre un amalgame constitué de colle et de fibres transférées de la feuille sur le cylindre par effet d'adhésion à la colle résiduelle. Il s'ensuit un encrassement rapide du dispositif affectant la qualité du produit, et induisant un risque de destruction du revêtement en caoutchouc par échauffement. Cela nécessite des arrêts fréquents pour le nettoyage. La mise en place d'un racle ne résout pas le problème car il ne peut atteindre les flancs des reliefs.

Une solution semblable est proposée dans le brevet US 3672949 pour l'association des plis non pas par emboîtement des protubérances mais pointes contre pointes. Selon ce procédé la colle est appliquée selon un motif de lignes croisées au moyen d'un cylindre encolleur présentant des reliefs correspondants.

Le brevet US 3961119 décrit un procédé de fabrication de feuilles à deux plis où ceux-ci sont gaufrés sur des cylindres présentant des gravures hélicoidales distinctes. On obtient sur chacun des plis des nervures parallèles entre elles. Les deux plis sont associés aux intersections des nervures. Afin d'éviter l'encollage de toute la surface des plis dans la zone des méplats des gravures, on prévoit des reliefs aux endroits où les hélices respectives des deux cylindres viennent en contact. Ainsi le cylindre encolleur n'applique la colle que sur ces reliefs. Toutefois, outre la difficulté de réalisation de tels cylindres gaufreurs, cette solution ne peut fonctionner de manière satisfaisante.

En effet, le cylindre applicateur de colle est lisse. Il reçoit de la colle sur toute la surface mais n'en transfère que sur les zones, peu nombreuses, du papier qui sont en relief. Il s'ensuit un assèchement de la colle résiduelle à la surface du cylindre. En outre, il capte des poussières et des fibres favorisant son encrassement. Des agglomérats de fibres et de colle peuvent se détacher et être entraînés par la feuille occasionnant des dégâts sur le cylindre.

La présente invention a pour objet un procédé d'application au moyen d'un dispositif d'encollage qui ne présente pas les inconvénients de l'art antérieur, c'est-à-dire un dispositif permettant un encollage par zones, de fonctionnement sûr, et ne nécessitant pas d'arrêts fréquents de machine pour nettoyer le cylindre applicateur.

Le procédé d'application de colle diluée dans un solvant tel que l'eau, conforme à l'invention, sur un substrat, tel qu'une bande de papier par exemple en ouate de cellulose, entraîné sur un cylindre rotatif, au moyen d'un dispositif applicateur comprenant au moins un réservoir de colle et un cylindre transférant la colle sur ledit substrat, est caractérisé en ce que ledit cylindre ne comporte pas de reliefs en bosse ou en creux visibles individuellement à l'oeil nu et comprend à sa surface des premières et deuxièmes zones, les deuxièmes zones présentant une mouillabilité à la colle supérieure à celle des premières zones de telle sorte que la quantité de colle entraînée par le cylindre sur lesdites deuxièmes zones est supérieure à la quantité de colle entraînée sur les premières zones.

Par l'expression "ne comporte pas de reliefs", on comprend un cylindre qui n'a pas subi de traitement pour modifier sa géométrie. Il ne comporte pas de reliefs en bosse ou en creux visibles individuellement à l'oeil nu.

L'ensemble des premières et des secondes zones constitue de préférence toute la surface du cylindre. Elles peuvent avoir une forme quelconque, bande, disque ou autre, et être disposées selon un motif quelconque réparti uniformément ou non.

Le dispositif comprend au moins un cylindre. Il pourrait s'agir alors d'un cylindre tramé comportant des zones avec des alvéoles de volumes différents. Il peut comprendre deux cylindres, avec un cylindre qui prélève la colle du réservoir - Système à barbotage ou à chambre à racle par exemple - et un cylindre applicateur. Il peut également être du type à trois cylindres avec un cylindre doseur entre le cylindre qui prélève la colle du réservoir et le cylindre applicateur de colle sur le substrat.

Lorsque le dispositif comprend au moins deux cylindres, le cylindre sur lequel on a délimité lesdites premières et secondes zones sera de préférence le cylindre applicateur de colle sur le substrat.

Grâce à cette solution, le cylindre encolleur, par le fait qu'il ne présente pas de relief n'est pas sujet à encrassement par accumulation locale de matière. La délimitation en zones permet par ailleurs une application non uniforme de colle sur le substrat. A la limite il est possible de faire en sorte que les premières zones soient exemptes de colle. On préférera cependant que le cylindre soit enduit sur toute sa surface ; dans ce cas, l'épaisseur du film de colle sera supérieure dans les secondes zones à celle des premières zones. La mouillabilité est l'aptitude de la surface à exercer une attraction sur le fluide considéré.

On peut ainsi appliquer la colle de manière non uniforme sur le substrat selon le motif choisi des premières et secondes zones sans risque d'accumulation inopportune de matière. En outre la surface entière du cylindre reste mouillée, et la colle ne séjourne pas un temps suffisant à la surface du cylindre pour sécher. Il ne se forme pas d'amalgame.

Selon une caractéristique particulière, les secondes zones ont été obtenues par un traitement local approprié de la surface du cylindre leur conférant une mouillabilité à la colle diluée dans le solvant, l'eau notamment, supérieure au reste de la surface qui constitue ainsi les premières zones.

L'invention a également pour objet un dispositif applicateur dont ledit cylindre appliquant la colle sur le substrat est à revêtement en matériau élastomère et les secondes zones présentent une surface tramée constituée d'alvéoles obtenues par gravure du revêtement.

L'invention a également pour objet un procédé de liaison de deux bandes de papier ou autre produit analogue au moyen d'une colle diluée dans un solvant tel que l'eau appliquée par un cylindre encolleur, permettant de minimiser l'effet de rigidification dû à la liaison entre les plis. Conformément à l'invention ce procédé est caractérisé en ce qu'on applique la colle sur l'une des bandes de papier selon des premières et des secondes zones de telle sorte que la quantité de colle déposée sur les premières zones soit inférieure à une limite à laquelle il se forme une liaison entre les deux bandes et la quantité déposée sur les secondes zones soit supérieure à ladite limite et assure une liaison entre les deux bandes de papier.

Les secondes zones seront choisies par exemple sous forme de disques répartis de manière quelconque à la surface des bandes de papier de façon que la bande stratifiée obtenue puisse être découpée en feuilles au format ainsi désiré tel que du papier hygiénique.

La quantité limite de colle diluée dans l'eau ou autre solvant le cas échéant, déposée sur les bandes de papier dépend, pour un support donné, de la nature de la colle utilisée. Elle correspond à la quantité maximale déposée entre les plis pour laquelle ils se détachent l'un de l'autre avec une très faible résistance à la délamination.

D'autres caractéristiques et avantages de la présente invention ressortiront de la description donnée ci-après d'un mode non limitatif de réalisation, se référant aux dessins annexés sur lesquels :
- la figure 1 représente de manière schématique une installation de gaufrage et de liage de deux bandes d'ouate de cellulose, connue en soi.
- la figure 2 représente la surface développée d'un cylindre encolleur conforme à l'invention. Une des secondes zones a été représentée à plus grande échelle.
- la figure 3 est un graphique montrant en ordonnée la quantité de colle, exprimée en pourcentage d'une valeur de gris (voir définition plus loin) effectivement déposée sur le substrat en fonction du débit de colle de l'applicateur, exprimé sur l'axe des abscisses en fraction d'un débit de référence.

L'installation de gaufrage (1) représentée comprend une première unité de gaufrage constituée d'un cylindre à revêtement en caoutchouc (3) et d'un cylindre gaufreur (5) à revêtement métallique pourvu de protubérances (50) à sa surface. Les protubérances ont été représentées exagérément grossies pour la clarté du dessin. Elle comprend également une deuxième unité de gaufrage avec un cylindre caoutchouc (7) et un cylindre gaufreur (9) avec des protubérances (90). Les deux cylindres gaufreurs (5) et (9) à axes parallèles ménagent entre eux un faible espace et sont entraînés en rotation à des vitesses synchrones et opposées de façon que leurs protubérances respectives viennent, au moins partiellement, en regard les unes des autres le long de la ligne de tangence sans contact.

Une première bande d'ouate de cellulose (11), dévidée depuis une bobine (110), est guidée autour du cylindre (3) puis est gaufrée par passage dans la zone de contact des deux cylindres (3) et (5). Elle reste appliquée sur le cylindre (5) dont elle épouse le relief. Dans la zone de liage entre les cylindres (5) et (9) elle rejoint une deuxième bande (13) issue d'une bobine (130), qui a subi la même opération de gaufrage entre les cylindres (7) et (9). Auparavant, la bande (13) a été enduite de colle, sur ses parties en relief venues du gaufrage, par le dispositif encolleur (20).

Le dispositif (20), selon le mode de réalisation représenté, comprend un cylindre barboteur (21) prélevant de la colle dans un récipient (23), un cylindre (22) doseur en acier, et un cylindre applicateur (25) à revêtement en caoutchouc ou autre élastomère. Le dispositif peut également être à deux cylindres et le cylindre barboteur remplacé par un cylindre tramé alimenté par une chambre à racle. Le cylindre (21) est entraîné à une vitesse de rotation déterminée par rapport à celle du cylindre (25) qui se recouvre d'un film de colle par léchage de la surface du cylindre doseur (22). La colle est ensuite appliquée sur les parties de la feuille de papier qui viennent au contact du film formé à la surface du cylindre (25). La vitesse de rotation du cylindre (25) est telle que le contact avec la feuille est sans glissement. On notera que pour éviter tout entraînement indésirable de la feuille par le cylindre encolleur, on doit maintenir un jeu minimal entre eux, légèrement inférieur à l'épaisseur du film. On règle le débit de colle et l'épaisseur du film, et ainsi la quantité transférée sur le papier, en choisissant un tramé approprié du cylindre doseur - profondeur, géométrie des alvéoles - ou bien un rapport déterminé des vitesses des cylindres. D'une façon générale, on sélectionne un débit permettant un dépôt aussi faible que possible tout en étant suffisant pour que soit assurée une liaison entre les plis. L'objectif est de rigidifier le moins possible la feuille. Il s'agit d'un critère important pour un papier absorbant à usage domestique ou sanitaire. En effet, on recherche pour ce type d'application des produits souples et doux.

La quantité de colle déposée étant définie, la rigidité de la feuille dépend du nombre et de la surface des zones de liaison entre les plis. Par exemple, dans le mode de réalisation représenté, ces zones de liaison correspondent aux zones de contact entre les protubérances des deux plis.

Si, en particulier, les motifs de gaufrage des deux plis sont identiques en dimension et en espacement, il y a autant de liaisons que de protubérances. Cependant lorsque le nombre de protubérances est élevé, le produit obtenu reste rigide même en réduisant la quantité de colle à la limite de laquelle il ne se forme plus de liaison entre les plis. On a cherché à pallier cet inconvénient en choisissant des motifs de gaufrage de pas différents, comme cela est décrit dans le brevet de la demanderesse FR 8914202; on diminue ainsi le nombre de points de liaison avec un effet favorable sur la souplesse de la feuille. Cependant, on a cherché encore à améliorer cette caractéristique de produit.

Le dispositif de l'invention permet maintenant de réduire le nombre de zones de liaison, quel que soit les pas des motifs de gaufrage choisis pour les deux plis, et sans faire usage d'un cylindre encolleur à surface en relief qui présente les inconvénients mentionnés dans le préambule de la présente demande.

On a constaté que la quantité de colle entraînée par le cylindre encolleur, toutes conditions étant égales par ailleurs, dépendait de son état de surface et de sa mouillabilité. Il s'agit de la mouillabilité à une colle diluée dans un solvant, en particulier de l'eau.

Dans l'exposé qui suit on se réfère à la mouillabilité à l'eau mais il faut comprendre mouillabilité à un solvant donné.

L'invention, selon un mode préféré de réalisation, a consisté à traiter la surface du cylindre (25), sans créer de reliefs, de façon que celle-ci présente des zones différentes de mouillabilité à la colle ; ainsi on parvient à déposer des quantités différenciées de colle sur le substrat.

On peut réaliser ce traitement de nombreuses manières. Par exemple, on peut utiliser un procédé de photogravure sur polymère connu dans les techniques d'impression tel que le procédé CYRELL de DUPONT & NEMOURS et le procédé FLEXLIGHT de GRACE ou bien un moyen mécanique consistant à incruster sur un cylindre caoutchouc siliconé des inserts en caoutchouc standard ou plus généralement à prévoir des revêtements différents par zones ou encore des applications de peinture. Ces moyens ne sont pas limitatifs et comprennent tout traitement thermique, chimique ou mécanique à la portée de l'homme du métier.

Un autre procédé susceptible d'être utilisé pour réaliser un cylindre encolleur conforme à l'invention consiste à revêtir le cylindre d'une première couche de base constituée d'un matériau présentant une grande affinité avec la colle. On usine cette couche de façon à former des protubérances réparties selon le motif souhaité. On dépose ensuite une deuxième couche d'un deuxième matériau sur la première en comblant les cavités entre les protubérances. Ce deuxième matériau est choisi de façon à ne pas être, ou être moins mouillé par la colle. Enfin on rectifie le cylindre jusqu'à ce que les protubérances affleurent. On obtient ainsi un cylindre lisse présentant des zones de mouillabilité différentes à la colle.

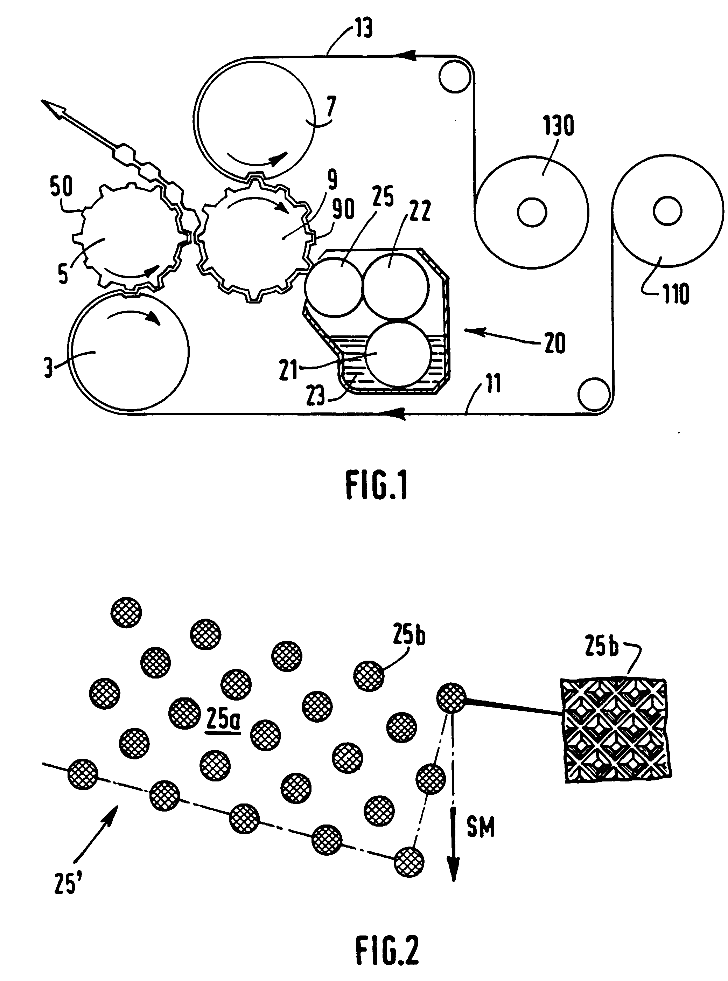

La figure 2 représente en développé une portion de surface d'un cylindre (25') encolleur conforme à un mode de réalisation de l'invention. Sur ce revêtement qui ne présente pas d'aspérité, on définit des premières zones (25a) et des secondes zones (25b). Les secondes zones (25b) ont été gravées au moyen d'un outil approprié, par exemple un faisceau laser, et présentent un réseau d'alvéoles microscopiques, accolées les unes aux autres, de capacité déterminée, capables de retenir une quantité de colle supérieure à celle du revêtement non gravé. La partie du revêtement non occupée par les secondes zones constitue les premières zones. Leur mouillabilité est celle du revêtement non traité.

Le fonctionnement du cylindre (25') est le même que celui du cylindre (25) de l'art antérieur. Toutefois, pour les raisons indiquées ci-dessus, l'épaisseur du film de colle à sa surface sera plus élevée sur les secondes zones que sur les premières zones. Lorsque la feuille de papier vient au contact du film ainsi formé, sa vitesse tangentielle relative par rapport au cylindre (25') étant nulle, la quantité de colle absorbée est uniquement fonction de l'épaisseur du film à l'endroit du contact, elle est d'autant plus importante que le film est épais. On retrouve donc sur la feuille un motif de premières et de secondes zones correspondant au motif du cylindre encolleur (25).

On comprend que l'on peut obtenir le résultat recherché, à savoir un encollage partiel, en s'assurant que le débit de colle par le cylindre (25'), à l'endroit des premières zones, soit inférieur à la limite à laquelle la colle appliquée sur le papier procure une liaison ultérieure satisfaisante avec la deuxième feuille, et à l'endroit des deuxièmes zones soit supérieur à cette même limite. A l'endroit des premières zones, il peut être choisi nul. Il est toutefois préférable de mouiller toute la surface du cylindre (25') pour éviter son échauffement qui nuirait au bon fonctionnement de l'installation.

La présente invention est particulièrement avantageuse lorsqu'il s'agit de lier deux plis gaufrés dont la densité des protubérances est compris entre 4 et 100 par cm², en particulier, lorsqu'elle est supérieure à 20 par cm² couvrant 5 % de la surface.

### Exemple:

On a utilisé sur une ligne pilote un cylindre encolleur conforme à l'invention.

Un cylindre encolleur a été garni avec un matériau élastomère de qualité sélectionnée pour présenter des propriétés mécaniques requises, notamment en ce qui concerne la résistance à l'abrasion, et un comportement vis à vis de la gravure laser satisfaisant, c'est-à-dire : facilité du traitement laser, état de surface de bonne qualité après gravure.

La dureté du revêtement est du même ordre que celle des encolleurs couramment utilisés en production. Elle est de 60 shore A.

On a gravé sur le revêtement des cavités de faible profondeur (40 à 60 µm) formant une trame régulière dont la densité est de 120 lignes par cm. On a traité ainsi des zones du revêtement en forme de disques de 15 mm de diamètre. Ces zones forment un réseau en quinconce, de pas 40 mm. En outre, afin d'éviter la formation de canaux, sens marche, ne présentant pas de colle, on a incliné le motif par rapport à ce même sens marche d'un angle compris entre 0 et 45°.

On a effectué des essais avec le cylindre encolleur sur une ligne pilote de gaufrage et de liage dont le motif de gaufrage comprend des protubérances réparties uniformément avec une densité de 55 plots par cm². On a pu constater que l'on pouvait obtenir une liaison des plis par zones en ajustant le débit de colle de façon appropriée.

La colle utilisée, courante pour cette application, était à base d'alcool polyvinylique diluée, dans l'eau, dans un rapport : eau 70 %, 30 % colle. Sa viscosité était environ de 85 centipoises.

### Mise en évidence de la liaison par zones.

Dans un premier temps, on a utilisé un cylindre encolleur standard, non traité, et on a réalisé plusieurs échantillons en ajustant le débit de colle à différentes valeurs. A partir d'un débit de référence correspondant à une enduction totale de x g/m² -x compris entre 0,01 et 1. On a obtenu des échantillons correspondants à des débits de 0,2, 0,4, 0,6, 0,8, 1 fois cette valeur.

Pour ces échantillons on a utilisé un papier, ouate de cellulose, de grammage 17 g/m².

On a visualisé les parties enduites de colle par coloration au moyen d'un révélateur approprié pour le type de colle utilisé. Pour la colle PVA de l'exemple, le révélateur est à base d'iode. Ainsi les surfaces encollées étaient colorées avec un teinte plus ou moins foncée selon la quantité de colle présente.

A partir d'un tirage photographique en noir et blanc on a quantifié la quantité de colle déposée en mesurant, au moyen d'un analyseur d'images, la valeur de gris par rapport à une valeur blanche de référence correspondant à une surface sans colle.

On a ainsi obtenu pour chacun des 5 échantillons une valeur de gris correspondant à la quantité de colle déposée.

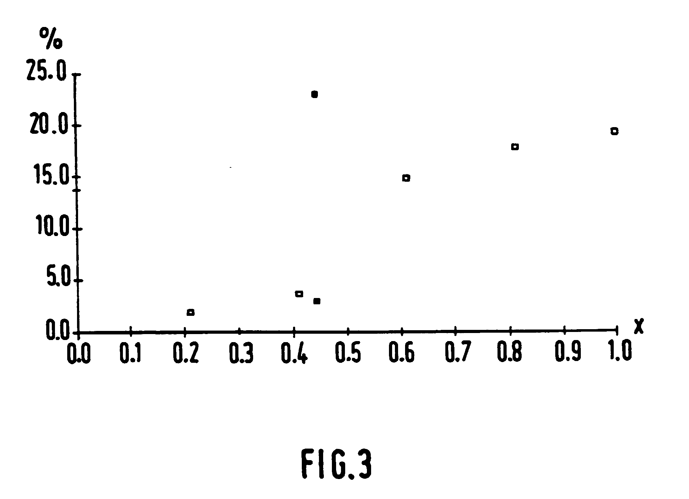

La figure 3 est une représentation graphique des mesures effectuées dans un repère orthonormé avec le débit de colle en abscisse et la valeur de gris exprimée en pourcentage en ordonnée.

On a constaté que, dans les conditions de l'expérience, les feuilles restaient collées entre elles lorsque le débit était réglé à 0.6. Le niveau de gris mesuré pour cette valeur est de 15 % comme cela apparaît sur le graphique. Pour un niveau de gris inférieur à 15 %, la quantité de colle est insuffisante pour fournir une liaison.

On a ensuite remplacé le cylindre encolleur standard par un cylindre conforme à l'invention, décrit plus haut.

On a encollé un échantillon de papier identique aux précédents et on a ajusté le dispositif d'encollage de façon que le débit de colle soit de l'ordre de 0,4. On est donc à un débit théorique inférieur à celui pour lequel il se forme une liaison.

On a constaté, que pour les premières zones, on avait effectivement un niveau de gris inférieur à la valeur de 15 %. En revanche les secondes zones montraient un niveau de gris de 25 %, largement au-dessus de la valeur limite à laquelle il se forme une liaison.

On a ainsi pu montrer que l'on pouvait réaliser un encollage non uniforme par lequel on obtient une enduction complète de la feuille mais où seules les secondes zones sont efficaces.

## Revendications

1. Procédé d'application de colle diluée dans un solvant tel que l'eau, notamment sur un substrat tel qu'une bande de papier (13) par exemple en ouate de cellulose, entraîné sur un cylindre rotatif (9), au moyen d'un dispositif applicateur (20) comprenant au moins un réservoir de colle (23) et un cylindre transférant la colle sur ledit substrat caractérisé en ce que ledit cylindre (25') ne comporte pas de reliefs en bosse ou en creux visibles individuellement à l'oeil nu et comprend à sa surface des premières (25a) et deuxièmes zones (25b), les deuxièmes zones (25b) présentant une mouillabilité à la colle supérieure à celle des premières zones de telle sorte que la quantité de colle entraînée par le cylindre (25') sur lesdites deuxièmes zones est supérieure à la quantité de colle entraînée sur les premières zones.

2. Procédé selon la revendication 1 pour lier par collage au moins deux bandes de papier ou autre produit analogue, caractérisé en ce qu'on applique la colle sur l'une des bandes de papier selon des premières et des secondes zones de telle sorte que la quantité de colle déposée sur les premières zones soit inférieure à une limite à laquelle il se forme une liaison entre les deux bandes, et la quantité déposée sur les secondes zones soit supérieure à ladite limite et assure une liaison entre les deux bandes de papier.

3. Procédé selon la revendication précédente, caractérisé en ce que l'on règle le débit de la colle fournie par le dispositif encolleur de telle sorte que la quantité de colle déposée par lesdites deuxièmes zones du cylindre applicateur soit suffisante pour assurer la liaison des deux bandes de papier, la quantité de colle déposée par les premières zones soit insuffisante pour lier les deux bandes de papier.

4. Procédé selon l'une des revendications 2 et 3, caractérisé en ce que l'on gaufre au préalable au moins l'une des deux bandes de papier, la colle étant appliquée sur les reliefs de gaufrage.

5. Procédé selon la revendication précédente, caractérisée en ce que le gaufrage consiste en des protubérances dont le nombre est compris entre 4 et 100 par cm².

6. Dispositif pour la mise en oeuvre du procédé selon l'une des revendications précédentes, caractérisé en ce que ledit cylindre est à revêtement en matériau élastomère et lesdites deuxièmes zones (25b) ont été obtenues par un traitement local approprié de la surface du cylindre leur conférant une mouillabilité à la colle diluée dans le solvant supérieure au reste de la surface qui constitue lesdites premières zones.

7. Dispositif selon la revendication 6, caractérisé en ce que les secondes zones du cylindre applicateur présentent une surface tramée constituée d'alvéoles obtenues par gravure du matériau élastomère.

8. Feuille obtenue selon l'une des revendications 2 à 5 caractérisée en ce qu'elle est constituée de deux plis gaufrés avec un nombre de protubérances compris entre 4 et 100 par cm².

## Patentansprüche

1. Verfahren zum Auftrag eines in einem Lösungsmittel so wie Wasser verdünnten Klebemittels, insbesondere auf einem Substrat so wie auf einer Papierbahn (13) beispielsweise aus Zellstoffwatte, die auf einen drehenden Zylinder (9) mitgenommen wird, mittels einer Appliziereinrichtung (20), die zumindest ein Klebemittelreservoir (23) und einen das Klebemittel auf das Substrat übertragenden Zylinder umfaßt, dadurch gekennzeichnet, daß der Zylinder (25') keine erhabenen oder vertieften Reliefs aufweist, die einzeln für das nackte Auge sichtbar sind, und auf seiner Oberfläche erste (25a) und zweite Zonen (25b) aufweist, wobei die zweiten Zonen (25b) eine Benetzbarkeit für das Klebemittel über derjenigen der ersten Zonen aufweisen, so daß die von dem Zylinder (25') mitgenommene Menge Klebmittel auf den zweiten Zonen größer ist als die auf den ersten Zonen mitgenommene Menge Klebemittel.

2. Verfahren gemäß Anspruch 1 zum Verbinden zumindest zweier Papierbahnen oder anderer analoger Produkte durch Kleben, dadurch gekennzeichnet, daß man das Klebemittel auf einer der Papierbahnen entlang erster und zweiter Zonen aufträgt, so daß die Menge Klebemittel, die auf den ersten Zonen abgelagert ist, geringer als ein Grenzwert ist, bei der sich eine Verbindung zwischen den beiden Bahnen bildet, und die auf den zweiten Zonen abgelagerte Menge größer als der Grenzwert ist und eine Verbindung zwischen den beiden Papierbahnen sicherstellt.

3. Verfahren gemäß dem vorstehenden Anspruch, dadurch gekennzeichnet, daß man die Ausbringung des von der Klebemittelauftragsvorrichtung gelieferten Klebemittels einstellt, so daß die von den zweiten Zonen des Auftragszylinders abgelagerte Menge Klebemittel ausreichend ist, um die Verbindung zwischen den beiden Papierbahnen sicherzustellen, wobei die auf den ersten Zonen abgelagerte Menge Klebemittel unzureichend wäre, die beiden Papierbahnen zu verbinden.

4. Verfahren gemäß irgendeinem der Ansprüche 2 und 3, dadurch gekennzeichnet, daß man zuvor zumindest eines der beiden Papierbahnen gaufriert, wobei das Klebemittel auf die Gaufrier-Reliefs aufgetragen wird.

5. Verfahren gemäß dem vorstehenden Anspruch, dadurch gekennzeichnet, daß die Gaufrierung aus Vorsprüngen besteht, wovon die Zahl zwischen 4 und 100 pro cm² enthalten ist.

6. Vorrichtung zur Durchführung des Verfahrens gemäß einem der vorstehenden Ansprüche, dadurch gekennzeichnet, daß der Zylinder einen Überzug aus elastomerem Material hat und die beiden zweiten Zonen (25b) durch eine geeignete lokale Behandlung der Oberfläche des Zylinders erhalten worden sind, die ihnen eine Benetzbarkeit für in einem Lösungsmittel verdünntes Klebemittel verleiht, die über derjenigen des Rests der Oberfläche ist, welche die ersten Zonen bildet.

7. Vorrichtung gemäß Anspruch 6, dadurch gekennzeichnet, daß die zweiten Zonen des Auftragszylinders eine gerasterte Oberfläche aufweist, die von durch Gravur des elastomeren Materials erhaltenen Näpfchen gebildet ist.

8. Blatt, erhalten nach irgendeinem der Ansprüche 2 bis 5, dadurch gekennzeichnet, daß es aus zwei gaufrierten Lagen mit einer Anzahl von Vorsprüngen, die zwischen 4 und 100 pro cm² enthalten ist, gebildet ist.

## Claims

1. Method for applying adhesive diluted in a solvent such as water, particularly on to a substrate such as a web of paper (13), for example of cellulose wadding, driven on a rotational cylinder (9), by means of an applicator device (20) comprising at least one adhesive reservoir (23) and a cylinder for transferring the adhesive on to the said substrate, characterized in that the said cylinder (25') does not have high or low reliefs which are individually visible to the naked eye and has, on its surface, first regions (25a) and second regions (25b), the second regions (25b) having a wettability by the adhesive which is greater than that of the first regions, such that the amount of adhesive entrained by the cylinder (25') on the said second regions is greater than the amount of adhesive entrained on the first regions.

2. Method according to Claim 1 for bonding at least two webs of paper or other like product by means of an adhesive, characterized in that the adhesive is applied to one of the webs of paper according to first and second regions such that the amount of adhesive deposited on the first regions is less than a limit at which a bond is formed between the two webs and the amount deposited on the second regions is greater than the said limit and produces a bond between the two webs of paper.

3. Method according to the preceding Claim, characterized in that the output of adhesive delivered by the adhesive applicator device is controlled so that the amount of adhesive deposited by the said second regions of the applicator cylinder is sufficient to bond the two webs of paper, the amount of adhesive deposited by the first regions being insufficient to bond the two webs of paper.

4. Method according to one of Claims 2 and 3, characterized in that at least one of the two webs of paper is first embossed, the adhesive being applied to the embossing reliefs.

5. Method according to the preceding Claim, characterized in that the embossing consists of protuberances numbering between 4 and 100 per cm².

6. Device for implementing the method according to one of the preceding Claims, characterized in that the said cylinder has a covering of elastomer material and the said second regions (25b) have been obtained by an appropriate local treatment of the surface of the cylinder which imparts to these regions a wettability by the adhesive diluted in the solvent which is greater than the rest of the surface which constitutes the said first regions.

7. Device according to Claim 6, characterized in that the second regions of the applicator cylinder have a surface with a grid pattern composed of cells obtained by engraving of the elastomer material.

8. Sheet obtained according to one of Claims 2 to 5, characterized in that it is composed of two plies embossed with a number of protuberances, numbering between 4 and 100 per cm².
